# EUROPEAN PATENT APPLICATION

(11) **EP 4 748 782 A1**
(43) Date of publication of application: **27.05.2026**
(21) Application number: 24214591.0
(22) Date of filing: 21.11.2024
(51) Int. Cl.: C01B 3/04

(54) **AMMONIA CRACKING FOR PRODUCING A CRACKED GAS FROM AMMONIA**

(71) Applicant: CASALE SA, 6900 Lugano (CH)
(72) Inventor: PIPINO, Aurelia, 6932 Breganzona (CH); DI ADDEZIO, Dario, 6900 Lugano (CH)
(74) Representative: M. Zardi & Co S.A.

(57) **Abstract**

A process for the catalytic synthesis of a cracked gas (30) from ammonia (NH₃) comprising the steps of:
(a) preheating and evaporating (2) liquid ammonia (1) to obtain an ammonia gaseous stream (3);
(b) subjecting said ammonia gaseous stream (3) to catalytic ammonia cracking (5, 7) in presence of heat to yield a cracked gas (30) containing nitrogen, hydrogen, and any unreacted ammonia;
wherein step (b) comprises a catalytic gas-heated cracking (GHC) step (5) and a fired cracking step (7), said fired cracking step (7) being performed in a cracking furnace including a plurality of externally heated catalytic tubes, at least part of a fired cracked gas (8) of said fired cracking step (7) being a heat input of the catalytic GHC step (5).

## Description

### Field of application

The invention is in the field of hydrogen production and particularly pertains to a process for the production of hydrogen by ammonia cracking.

### Prior art

The excessive use of fossil fuels both in the electricity and transportation sector has resulted in harmful effects on human health and welfare, as well as on the environment. Currently, there is a strong need to come up with environmental and sustainable alternatives to fossil fuels due to increasing stringent emissions regulations and environmental awareness.

Hydrogen (H₂) and ammonia (NH₃) are carbon-free carriers and are considered ideal replacements of fossil fuels.

At a small scale, hydrogen can be produced from various domestic resources such as solar power, wind power, and electrolysis. Conversely, at an industrial scale, hydrogen is obtained via reforming of fossil fuels mostly by reforming of natural gas (steam reforming) or water gas shift of coal-derived syngas.

Hydrogen produced by steam reforming requires a multistep process, starting from natural gas desulphurization, high-temperature reforming, high and low-temperature water-gas shift conversions (WGS), and purification.

Unfortunately, as a result of the reforming process, large amounts of carbon dioxide (CO₂) are emitted into the atmosphere.

Green ammonia - i.e. ammonia produced by renewable energy sources such as wind or solar energy - is a carbon-free storage vector of hydrogen with many potential energy applications, including the production of green hydrogen. Hydrogen can be obtained from ammonia via a thermal decomposition process known as ammonia cracking. Ammonia cracking is a technology allowing green hydrogen to be available in places where geographical limitations make hydrogen production expensive and/or insufficient.

In a catalytic ammonia cracking process, ammonia is decomposed ("cracked") into H₂ and nitrogen (N₂) in presence of heat and of a catalyst (Ni or Ru or Pt) according to the following chemical equilibrium:

2 NH₃ ↔ 3H₂ + N₂

Thermodynamic conversion of ammonia to hydrogen is possible at a temperature as low as 425 °C. However, in practice, the conversion rate depends on the type of catalyst being used. Typically, Ni is active at higher temperatures (500-750 °C) than Ru (400 °C), but this latter catalyst is more expensive.

Energy transition challenges require to boost green hydrogen production by proposing new solutions to increase process and plant capacities over the currently known technologies.

### Summary of the invention

The invention aims to overcome the above drawbacks of the prior art. In particular, the problem addressed by the invention is how to increase process and plant capacities for producing hydrogen by the route of catalytic ammonia cracking.

An object of the present invention is a process for the catalytic synthesis of a cracked gas from ammonia comprising the steps of:
(a) preheating and evaporating liquid ammonia to obtain an ammonia gaseous stream;
(b) subjecting said ammonia gaseous stream to catalytic ammonia cracking in presence of heat to yield a cracked gas containing nitrogen, hydrogen, and any unreacted ammonia;
wherein step (b) comprises a catalytic gas-heated cracking (GHC) step and a fired cracking step, said fired cracking step being performed in a cracking furnace including a plurality of externally heated catalytic tubes, at least part (e.g., all) of a fired cracked gas of said fired cracking step being a heat input of the catalytic GHC step.

In the present description "gas-heated cracking" and its acronym "GHC" are used interchangeably as synonyms.

### Advantageous effects of the invention

Advantageously, the process of the present invention is capable of boosting the capacity achievable by single train processes and plants.

Advantageously, the process of the present invention is designed for improving heat recovery. This results in a very high plant efficiency.

Advantageously, reduced or no carbon dioxide emissions are freed into the atmosphere with the process of the present invention.

Advantageously, a balance of a supplementary fuel (such as natural gas or other fossil fuel or biofuel) can be added to the fuel made available by the process to sustain the combustion, and thus improving the yield of hydrogen. Due to a relatively low amount of natural gas used in such embodiment, carbon dioxide emissions of the process of the present invention are still lower than emissions expected in a conventional hydrogen synthesis process.

Furthermore, if a biofuel source is available, carbon dioxide (CO₂) is produced without impact on an overall carbon footprint of the process.

Advantageously, heat recovery is improved or maximized in order to provide the heat required for the process, in particular to preheat and/or to evaporate the ammonia feed and/or for generating steam and/or for the ammonia cracking reaction.

Advantageously, ammonia conversion is improved or maximized in the present process, and consequently the overall ammonia feed consumption is reduced.

Advantageously, the present process allows to increase an overall energy efficiency, reducing the consumption of the makeup fuel required to cover the overall heat demand of the process.

### Preferred embodiments of the present invention

Said part 35 of the fired cracked gas 8 is preferably comprised from 5% to 100% of a volumetric flowrate of said fired cracked gas 8, preferably comprised from 50% to 100%, more preferably comprised from 80% to 100%, even more preferably comprised from 95% to 100%, still more preferably comprised from 98% to 100%.

According to further embodiments, said part 35 of the fired cracked gas 8 may be in a range comprised from 5% to 100% of the volumetric flowrate of said fired cracked gas 8, preferably comprised from 10% to 50%, more preferably comprised from 15% to 40%.

Preferably, a temperature of the fired cracked gas exiting the fired cracking step is comprised from 400 °C to 950 °C, more preferably comprised from 550 °C to 750 °C.

According to another embodiment, the step (b) may be carried out at a pressure comprised from 5 barg (bar gauge) to 65 barg, preferably comprised from 15 barg to 60 barg, more preferably comprised from 30 barg to 55 barg, e.g. 50 barg.

According to still another embodiment, said catalytic GHC step and said fired cracking step are not followed by a last ammonia cracking step performed adiabatically without providing heat to the process stream under cracking, and/or are not followed by a step of quenching said cracked gas by direct mixing with water and/or steam after said catalytic GHC step and/or said fired cracking step, these steps being the last ammonia cracking steps of said process.

According to different embodiments, said catalytic GHC step 5 and said fired cracking step 7 are in a parallel arrangement or in a serial arrangement.

In the embodiment where the arrangement is parallel, said catalytic GHC step 5 and said fired cracking step 7 not preceded by any step of pre-cracking or of adiabatic cracking of said ammonia gaseous stream 3.

Preferably, said ammonia gaseous stream 3 is split into a first ammonia portion 22 supplied to the catalytic GHC step 5 and a second ammonia portion 23 supplied to the fired cracking step 7. Said part 35 of the fired cracked gas 8 is supplied as a heat-exchanging medium to a gas-heated cracker 5 to heat the first ammonia portion 22 supplied to a tube side of said gas-heated cracker 5.

Said first ammonia portion 22 is preferably equal to, smaller than, said second ammonia portion 23, more preferably smaller by an amount comprised from 1% to 45%, even more preferably comprised from 10% to 30%.

According to different embodiments, the gas-heated cracker 5 may have two inlets and only one outlet (three-nozzle configuration), or two inlets and two outlets (four-nozzle configuration).

In the former instance (three-nozzle configuration), the two inlets are for the first ammonia portion 22 and for the fired cracked gas 8, and the only outlet is for the cracked gas 30. In such embodiment, mixing between a GHC cracked gas coming from the tube side of said gas-heated cracker 5 and the fired cracked gas 8 is performed within said gas-heated cracker 5 to obtain said cracked gas 30.

In the latter instance (four-nozzle configuration), a heat-exchanged stream 24 withdrawn from said shell side of the gas-heated cracker 5 is mixed with the GHC cracked gas 6 coming from the tube side of said gas-heated cracker 5.

In the embodiment where the arrangement is in series, step (b) may comprise at least one adiabatic pre-cracking step 9 performed upstream of said catalytic GHC step 5 and fired cracking step 7.

In the embodiment where the arrangement is in series, the fired cracking step 7 is preferably arranged downstream to said gas-heated cracking step 5.

Preferably, the ammonia gaseous stream 3 - optionally after at least one adiabatic pre-cracking step 9 - is supplied to a tube side of a gas-heated cracker 5 to obtain a GHC cracked gas 6; said GHC cracked gas 6 being fed to the fired cracking step 7.

Said part 35 of the fired cracked gas 8 is preferably supplied as a heating medium to a shell side of the gas-heated cracker 5 to indirectly heat said ammonia gaseous stream 3, or an optional adiabatically pre-cracked stream 4, undergoing cracking in the tube side of said gas-heated cracker 5.

According to an embodiment, said process comprises cooling 11 of said cracked gas 30 by indirectly exchanging heat with at least two different heat-exchange media. Said heat-exchange media are preferably said liquid ammonia 1 and water or steam 25. Said liquid ammonia 1 is thus preheated and/or evaporated by said indirect heat exchange.

According to another embodiment, said cracking furnace comprises a convective section, and step (a) comprises passing said liquid ammonia 1 through said convective section to obtain a partially evaporated stream 28.

According to still another embodiment, said process further comprises:
(c) subjecting the cracked gas 30 - optionally after cooling - to ammonia recovery 13 to obtain an ammonia-depleted stream 15 and an ammonia-enriched stream (14);
and at least one chosen from:
(d) recirculating at least a portion 16 of the ammonia-depleted stream 15 as fuel 10 to said cracking furnace; and/or
(e) recirculating at least a portion of the ammonia-enriched stream 14 as feed to step (b), optionally after pre-heating and evaporating.

Preferably, said ammonia-enriched stream 14 is a substantially anhydrous ammonia stream.

With respect to step (e), said optional steps of pre-heating and evaporating are preferably performed by an indirect heat exchange with flue gases 34 of the cracking furnace 7 and/or with the cracked gas 30. In particular, these steps involve bringing the ammonia-enriched stream 14 in gaseous form and at a temperature required by step (b).

According to still another embodiment, said process further comprises:
(f) subjecting the ammonia-depleted stream 15 to a hydrogen recovery 17 to obtain a hydrogen product 18 and a tail gas 19;
(g) recirculating at least a portion of said tail gas 19 (e.g., all said tail gas 19) and/or a portion 20 of said hydrogen product 18 as fuel 10 to said cracking furnace.

E.g. said portion of said tail gas 19 is comprised from 0.1% to 100% in terms of total flow, preferably comprised from 80% to 100%.

Preferably, said hydrogen recovery 17 comprises steps of pressure swing adsorption, or membrane purification (e.g., Pd-Membrane purification), or cryogenic purification.

Said hydrogen product 18 may have an amount of hydrogen higher than 75% molar, more preferably higher than 90% molar, even more preferably higher than 99% molar, still more preferably higher than 99.7 % molar, such as higher than 99.99999% molar.

According to a preferred embodiment, a flue gas of said fired cracking step 7 is subjected to an abatement of nitrogen oxides (NOx; e.g., NO and NO₂) and/or nitrous oxide (N₂O) therein contained, also termed deNOx step and/or deN₂O step. In other words, combusted gases (flue gas) generated by the combustion of such fuel 10 may then be treated in the deNOx step and/or deN₂O step (not shown in the figures) to remove NOx before being vented into the atmosphere.

These combusted gases may be heat exchanged to recover heat before or after said deNOx stage.

Preferably, the deNOx stage may include a SCR unit or a SNCR unit or a combination of both. NOx removal carried out via SCR can be performed in a temperature range comprised from 120 °C to 650 °C, more preferably comprised from 300 °C to 600 °C.

NOx removal carried out via SNCR can be performed in a temperature range comprised from 850 °C to 1.200 °C, more preferably comprised from 900 °C to 1.050 °C.

### Description of the figures

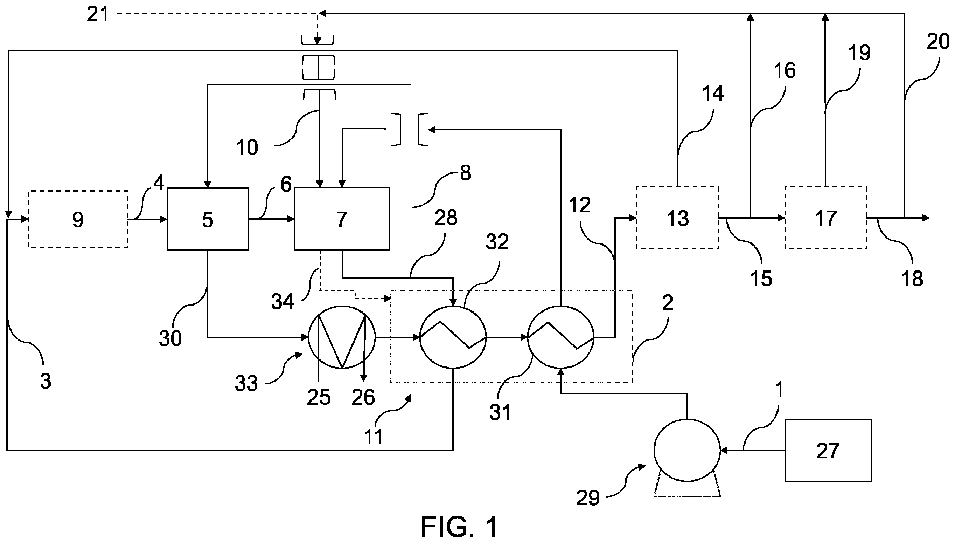

Fig. 1, Fig. 2, Fig. 3, Fig. 4, Fig. 5: schematic representations of the cracked gas synthesis process according to different embodiments of the present invention.

### Detailed description of preferred embodiments

Fig. 1 shows a schematic representation of a cracked gas 30 synthesis process according to a first embodiment of the invention.

By means of an ammonia feed pump 29, liquid ammonia 1 is fed from an ammonia source 27 (e.g., a storage feed tank) to preheating and evaporation steps 2 (step (a)), so as to obtain an ammonia gaseous stream 3 that has been vaporized.

After step (a) liquid ammonia 1 is vaporized at least in part (for example: completely) and the resulting ammonia gaseous stream 3 is preheated to the temperature required for the subsequent ammonia cracking steps.

The preheating and evaporation steps 2 comprise passing said liquid ammonia 1 - in sequence - through a first indirect heat exchanger 30, a convective section of a cracking furnace 7, and a second indirect heat exchanger 32.

The ammonia gaseous stream 3 may be fed to an optional adiabatic pre-cracking step 9 to obtain an adiabatically pre-cracked stream 4.

The ammonia gaseous stream 3 or the adiabatically pre-cracked stream 4 are then fed to a tubular gas-heated cracker 5 to be catalytically cracked in presence of heat to yield a GHC cracked gas 6. The required heat is provided by a downstream fired ammonia cracking step 7 comprising burners fed with a fuel 10 as described in detail below. A portion of said fuel 10 may be a supplementary fuel 21, in particular a hydrocarbon fuel, e.g. natural gas or a biofuel.

The ammonia gaseous stream 3 is supplied to a catalyst-filled tube side (i.e., first side) of the gas-heated cracker 5 to generate the GHC cracked gas 6.

The GHC cracked gas 6 is subsequently fed to the cracking furnace 7 to be further catalytically cracked to yield a fired cracked gas 8 containing hydrogen, nitrogen, and any unconverted ammonia.

At least part of the fired cracked gas 8 - corresponding, in this embodiment, to 100% of the volumetric flow of such fired cracked gas 8 - is fed to a shell side (i.e., second side) of the gas-heated cracker 5 to exchange heat with the ammonia gaseous stream 3 or adiabatically pre-cracked stream 4 undergoing cracking in the tube side of the gas-heated cracker 5. After heat exchange, a cracked gas 30 is withdrawn from the shell side of the gas-heated cracker 5.

The cracking furnace 7 typically comprises a furnace provided with a radiant section and a convection section to recover the heat from the radiant section. Said radiant section preferably comprises a bundle of tubes that retain a cracking catalyst, such as a Ni-based catalyst or a Ru-based catalyst, or a mixture thereof.

The heat required to sustain the endothermic reaction in the cracking furnace 7 is provided by the combustion of said fuel 10 in said burners in presence of air or oxygen-enriched air.

The cracked gas 30 subjected to cooling 11 to obtain a cooled cracked stream 12 by indirect heat exchange.

Such cooling 11 is performed using water or steam 25 to obtain steam 26 in a steam generator 33, and then by indirectly exchanging heat with a partially evaporated stream 28 coming from the cracking furnace 7 (second indirect heat exchanger 32) and with the liquid ammonia 1 pumped by the ammonia feed pump 29 (first indirect heat exchanger 31).

The cooled cracked stream 12 is then sent to an ammonia recovery section 13 to yield an ammonia-depleted stream 15 and an ammonia-enriched stream 14.

The ammonia-enriched stream 14 is recycled as feed to step (b), optionally after pre-heating and evaporating.

A portion 16 of the ammonia-depleted stream 15 could recirculated as fuel 10 to the cracking furnace. Flue gases 34 of the cracking furnace may be used for performing step (a) and, optionally, for pre-heating and evaporating the ammonia-enriched stream 14 before step (b).

The ammonia-depleted stream 15, or the portion of the ammonia-depleted stream 15 that is not recirculated as fuel, is then fed to a hydrogen recovery section 17 to yield a hydrogen product 18 having a desired purity (e.g. a high-purity) and a tail gas 19.

The hydrogen product 18 is withdrawn from the hydrogen recovery section 17 and stored and/or exported from the plant according to hydrogen demands.

The tail gas 19 is fed as fuel 10 to the cracking furnace 7.

A portion 20 of the hydrogen product 18 may also be fed as fuel 10 to the cracking furnace 7.

The resulting fuel 10 comprises mainly nitrogen, and hydrogen in minor amounts. Combustion of this fuel results in a nitrogen-rich flue gas containing water and oxygen (e.g., this latter in an amount comprised from 1 %vol to 5 %vol, such as 2 %vol).

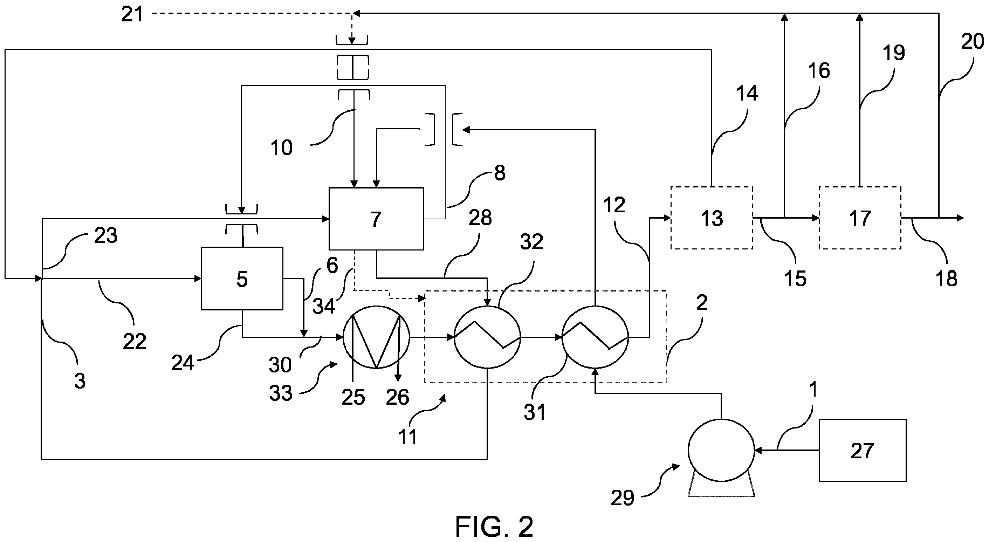

Fig. 2 shows a schematic representation of a process for the catalytic synthesis of a cracked gas according to a second embodiment of the invention.

With respect to the embodiment of Fig. 1, the tubular gas-heated cracker 5 and the cracking furnace 7 are in a parallel arrangement with respect to the ammonia gaseous stream 3. In such parallel arrangement the catalytic GHC step 5 and the fired cracking step 7 are not preceded by any step of pre-cracking or of adiabatic cracking of said ammonia gaseous stream 3.

The ammonia gaseous stream 3 is split into a first ammonia portion 22 and a second ammonia portion 23.

The first ammonia portion 22 is supplied to the tubular gas-heated cracker 5. The second ammonia portion 23 is supplied to the fired cracker 7. Ammonia is cracked in both the tubular gas-heated cracker 5 and the fired cracker 7 to yield, respectively, the GHC cracked gas 6 and the fired cracked gas 8.

A part corresponding to 100% of the flow of the fired cracked gas 8 is fed to a shell side of the gas-heated cracker 5 to exchange heat with the first ammonia portion 22 undergoing cracking in the tube side of the gas-heated cracker 5. After heat exchange, a heat-exchanged stream 24 is withdrawn from the shell side of the gas-heated cracker 5 and mixed with the GHC cracked gas 6 to obtain the cracked gas 30.

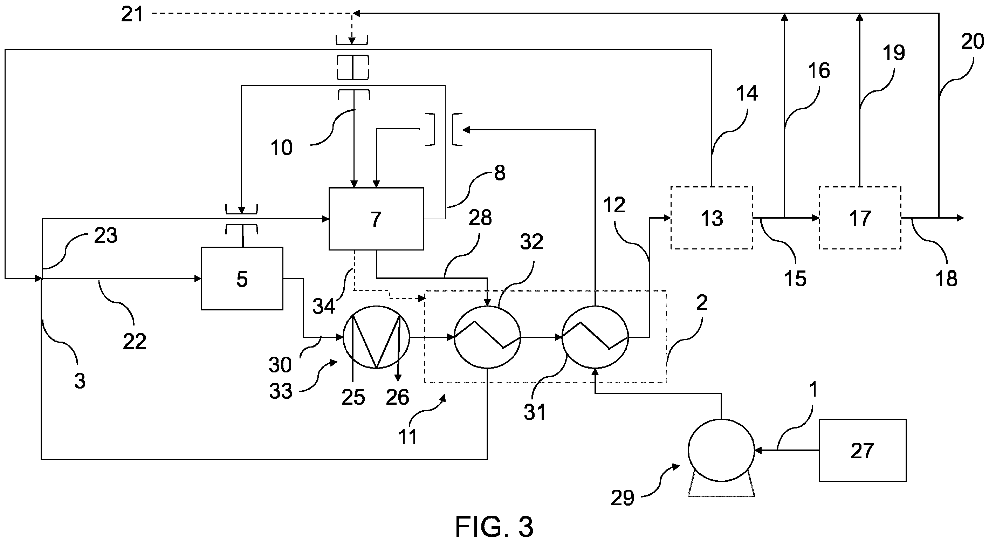

Fig. 3 shows a schematic representation of a process for the catalytic synthesis of a cracked gas according to a third embodiment of the invention.

With respect to the embodiment of Fig. 2, the gas-heated cracker 5 has a three-nozzle configuration with two inlets for the first ammonia portion 22 and for the fired cracked gas 8, and only one outlet for the cracked gas 30. In such embodiment, mixing between the GHC cracked gas coming from the tube side of said gas-heated cracker 5 and of the fired cracked gas 8 is performed within said gas-heated cracker 5, so that the cracked gas 30 is withdrawn from the gas-heated cracker 5. Expressed in other terms, in this embodiment the GHC cracked gas and the fired cracked gas 8 exchange heat and matter within the gas-heated cracker 5 to obtain the cracked gas 30.

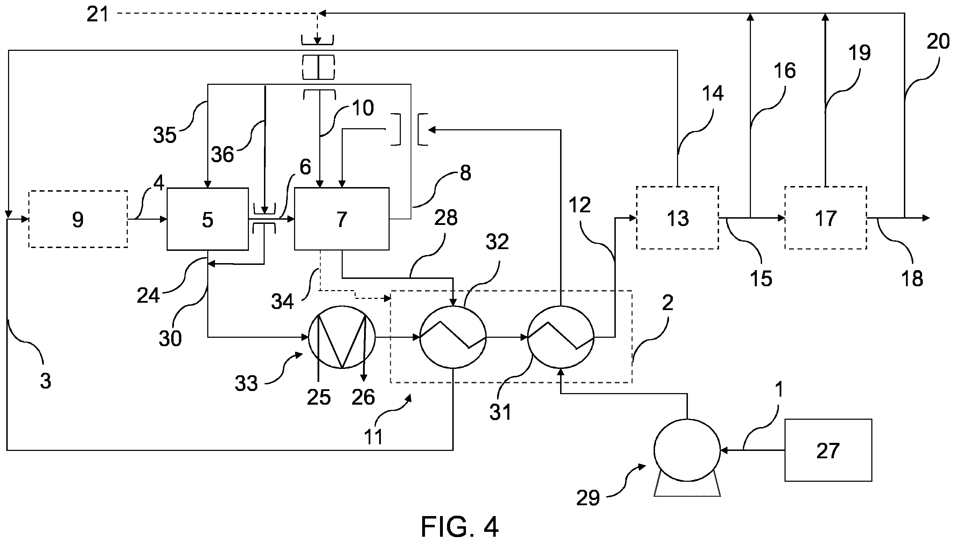

Fig. 4 shows a schematic representation of a process for the catalytic synthesis of a cracked gas according to a fourth embodiment of the invention.

With respect to the embodiment of Fig. 1, a part 35 of the fired cracked gas 8 - corresponding to only a part of the flow of such fired cracked gas 8 - is fed to the shell side of the gas-heated cracker 5. The other part 36 of the fired cracked gas 8 bypasses the gas-heated cracker 5. After heat exchange, the heat-exchanged stream 24 is mixed with said other part 36 of the fired cracked gas 8 downstream of the gas-heated cracker 5 so obtaining the cracked gas 30.

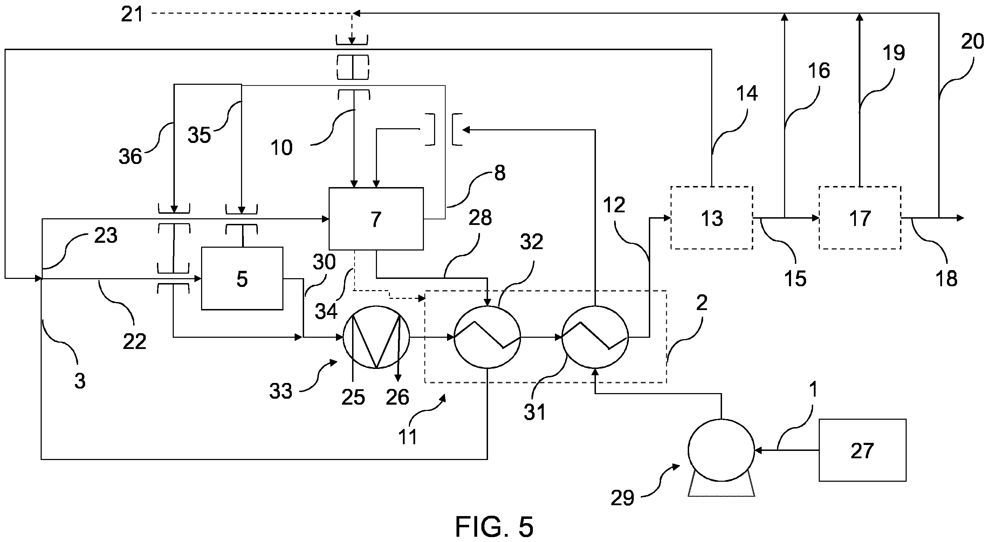

Fig. 5 shows a schematic representation of a hydrogen or cracked gas synthesis process according to a fifth embodiment of the invention.

With respect to the embodiment of Fig. 3, a part 35 of the fired cracked gas 8 - corresponding to only a part of the flow of such fired cracked gas 8 - is fed to the gas-heated cracker 5. The other part 36 of the fired cracked gas 8 bypasses the gas-heated cracker 5 and mixes with the cracked gas 30 downstream of the gas-heated cracker 5.

### LIST OF THE REFERENCE SIGNS

- 1: liquid ammonia
- 2: preheating and evaporation step
- 3: ammonia gaseous stream
- 4: adiabatically pre-cracked stream
- 5: catalytic gas-heated cracking (GHC) step or gas-heated cracker
- 6: GHC cracked gas
- 7: fired ammonia cracking step or cracking furnace
- 8: fired cracked gas
- 9: adiabatic pre-cracking step
- 10: fuel
- 11: cooling step
- 12: cooled cracked stream
- 13: ammonia recovery step or section
- 14: ammonia-enriched stream
- 15: ammonia-depleted stream
- 16: portion of the purified gas stream
- 17: hydrogen recovery step
- 18: hydrogen product
- 19: tail gas
- 20: portion of the hydrogen product
- 21: supplementary fuel
- 22: first ammonia portion
- 23: second ammonia portion
- 24: heat-exchanged stream
- 25: water or steam, preferably boiler feed water
- 26: steam, preferably medium-pressure (MP) steam
- 27: ammonia source, e.g. storage feed tank
- 28: partially evaporated stream
- 29: ammonia feed pump
- 30: cracked gas
- 31: first indirect heat exchanger
- 32: second indirect heat exchanger
- 33: steam generator
- 34: flue gases
- 35: part of the fired cracked gas
- 36: other part of the fired cracked gas

## Claims

1. A process for the catalytic synthesis of a cracked gas (30) from ammonia (NH₃) comprising the steps of:
(a) preheating and evaporating (2) liquid ammonia (1) to obtain an ammonia gaseous stream (3);
(b) subjecting said ammonia gaseous stream (3) to catalytic ammonia cracking (5, 7) in presence of heat to yield a cracked gas (30) containing nitrogen, hydrogen, and any unreacted ammonia;
wherein step (b) comprises a catalytic gas-heated cracking (GHC) step (5) and a fired cracking step (7), said fired cracking step (7) being performed in a cracking furnace including a plurality of externally heated catalytic tubes, at least part (35) of a fired cracked gas (8) of said fired cracking step (7) being a heat input of the catalytic GHC step (5).

2. The process according to claim 1, wherein said catalytic GHC step (5) and said fired cracking step (7) are not followed by a last ammonia cracking step performed adiabatically without providing heat to the process stream under cracking and are not followed by a step of quenching said cracked gas (30) by direct mixing with water and/or steam after said catalytic GHC step (5) and/or said fired cracking step (7) that are the last ammonia cracking steps of said process.

3. The process according to claim 1 or 2, wherein said catalytic GHC step (5) and said fired cracking step (7) are in a parallel arrangement and are not preceded by any step of pre-cracking or of adiabatic cracking of said ammonia gaseous stream (3).

4. The process according to claim 3, wherein said ammonia gaseous stream (3) is split into a first ammonia portion (22) supplied to the catalytic GHC step (5) and a second ammonia portion (23) supplied to the fired cracking step (7); said part (35) of the fired cracked gas (8) being supplied as a heat-exchanging medium to a gas-heated cracker (5) to heat the first ammonia portion (22) supplied to a tube side of said gas-heated cracker (5).

5. The process according to claim 4, wherein a heat-exchanged stream (24) withdrawn from a shell side of the gas-heated cracker (5) is mixed with a GHC cracked gas (6) coming from the tube side of said gas-heated cracker (5).

6. The process according to claim 4, wherein said gas-heated cracker (5) has a three-nozzle configuration with two inlets for the first ammonia portion (22) and for the fired cracked gas (8), and only one outlet for the cracked gas (30), whereby mixing between a GHC cracked gas coming from the tube side of said gas-heated cracker (5) and the fired cracked gas (8) is performed within said gas-heated cracker (5) to obtain said cracked gas (30).

7. The process according to claim 1 or 2, wherein said fired cracking step (7) is in a serial arrangement downstream to said catalytic GHC step (5); wherein said ammonia gaseous stream (3) - optionally after at least one adiabatic pre-cracking step (9) - is supplied to a tube side of a gas-heated cracker (5) to obtain a GHC cracked gas (6); said GHC cracked gas (6) being fed to the fired cracking step (7).

8. The process according to claim 7, wherein said part (35) of the fired cracked gas (8) is supplied as a heating medium to a shell side of the gas-heated cracker (5) to indirectly heat said ammonia gaseous stream (3), or an optional adiabatically pre-cracked stream (4), undergoing cracking in the tube side of said gas-heated cracker (5).

9. The process according to any of the previous claims, further comprising cooling (11) of said cracked gas (30) by indirectly exchanging heat with at least two different heat-exchange media, said heat-exchange media being said liquid ammonia (1) and water or steam (25), said liquid ammonia (1) being thus preheated and/or evaporated by said indirect heat exchange.

10. The process according to any of the previous claims, wherein said cracking furnace comprises a convective section, and wherein step (a) comprises passing said liquid ammonia (1) through said convective section to obtain a partially evaporated stream (28).

11. The process according to any of the previous claims, further comprising:
(c) subjecting the cracked gas (30) - optionally after cooling - to ammonia recovery (13) to obtain an ammonia-depleted stream (15) and an ammonia-enriched stream (14), preferably said ammonia-enriched stream (14) being a substantially anhydrous ammonia stream; and
(d) recirculating at least a portion (16) of the ammonia-depleted stream (15) as fuel (10) to said cracking furnace;

12. The process according to any of the previous claims, further comprising:
(c) subjecting the cracked gas (30) to ammonia recovery (13) to obtain an ammonia-depleted stream (15) and an ammonia-enriched stream (14), preferably said ammonia-enriched stream (14) being a substantially anhydrous ammonia stream; and
(e) recirculating at least a portion of the ammonia-enriched stream (14) as feed to step (b), optionally after pre-heating and evaporating.

13. The process according to any of claims 11-12, further comprising:
(f) subjecting the ammonia-depleted stream (15) to a hydrogen recovery (17) to obtain a hydrogen product (18) and a tail gas (19); preferably said hydrogen recovery (17) comprising steps of pressure swing adsorption, or membrane purification, e.g., Pd-Membrane purification, or cryogenic purification; and
(g) recirculating at least a portion of said tail gas (19), e.g., all said tail gas (19), and/or a portion (20) of said hydrogen product (18) as fuel (10) to said cracking furnace. preferably wherein said hydrogen product (18) has an amount of hydrogen higher than 75% molar, more preferably higher than 90% molar, even more preferably higher than 99% molar, still more preferably higher than 99.7 % molar, such as higher than 99.99999% molar.

14. The process according to any of the previous claims, wherein a flue gas of said fired cracking step (7) is subjected to an abatement of nitrogen oxides (NOx; e.g., NO and NO₂) and/or nitrous oxide (N₂O) therein contained.

15. The process according to any of the previous claims, wherein said part (35) of the fired cracked gas (8) is comprised from 5% to 100% of a volumetric flowrate of said fired cracked gas (8), preferably comprised from 50% to 100%, more preferably comprised from 80% to 100%, even more preferably comprised from 95% to 100%, still more preferably comprised from 98% to 100%.
